# EUROPEAN PATENT APPLICATION

(11) **EP 2 251 838 A2**
(43) Date of publication of application: **17.11.2010**
(21) Application number: 10162141.5
(22) Date of filing: 06.05.2010
(51) Int. Cl.: G07C 9/00

(54) **System and method for setting communication availability of electronic key**

(30) Priority: 13.05.2009 JP 2009116816
(71) Applicant: KABUSHIKI KAISHA TOKAI RIKA DENKI SEISAKUSHO, Niwa-gun, Aichi 480-0195 (JP)
(72) Inventor: Fushimi, Akira, Niwa-gun Aichi 480-0195 (JP); Shibagaki, Toshimasa, Niwa-gun Aichi 480-0195 (JP); Mori, Hiroshi, Niwa-gun Aichi 480-0195 (JP)
(74) Representative: Skuhra, Udo

(57) **Abstract**

A system for setting communication availability of an electronic key for transmitters in a communication subject of the electronic key. The electronic key receives a normal signal from one of the transmitters and returns an ID code. A dummy signal transmission unit of the communication subject generates a dummy signal synchronized with the normal signal and transmits the dummy signal from a transmitter that does not transmit the normal signal. A signal output unit of the electronic key receives a combined signal of the normal and dummy signals and outputs a characteristic signal that varies according to the level of the combined signal. A location determination unit of the electronic key determines the transmitter located near the electronic key from a conforming value corresponding to a variation in the characteristic signal.

## Description

This application is based upon and claims the benefit of priority from prior Japanese Patent Application No. 2009-116816, filed on May 13, 2009, the entire contents of which are incorporated herein by reference.

The present invention relates to an electronic key system that performs communication between an electronic key and a vehicle, and more particularly, to a system and method for setting communication availability of an electronic key that determines whether or not to establish wireless communication between the electronic key and the vehicle.

An electronic key system is convenient and thus often used in vehicles. Such an electronic key system includes an electronic key, which serves as a vehicle key. The electronic key transmits an ID code, which serves as a key code, through wireless communication to a vehicle, which verifies the ID code. One example of such an electronic key system is a key-operation-free system including an electronic key that receives a request from a vehicle and automatically returns an ID code to the vehicle, which verifies the ID code. Examples of a key-operation-free system include a smart entry system and a one-push engine start system. The smart entry system locks and unlocks a door (opens and closes a door lock) without the need for a key operation when ID verification performed outside the vehicle is successful. The one-push engine start system allows the driver to start the engine just by pushing an engine switch when ID verification performed inside the vehicle is successful.

There is a trigger type smart entry key system that initiates the transmission of a request when a door handle, which is located on the exterior of the vehicle, is touched or when a button is operated. In the trigger type smart entry key system, a driver door is normally locked and unlocked separately from a passenger door. For example, in a state in which the driver door is locked, when the door handle located on the exterior of the driver door is touched, a vehicle exterior transmitter, which is arranged in the driver door, transmits a request. The driver door is then unlocked when ID verification is successful. Further, in a state in which the passenger door is locked, when the door handle located on the exterior of the passenger door is touched, a vehicle exterior transmitter, which is arranged in the passenger door, transmits a request. The passenger door is then unlocked when ID verification is successful.

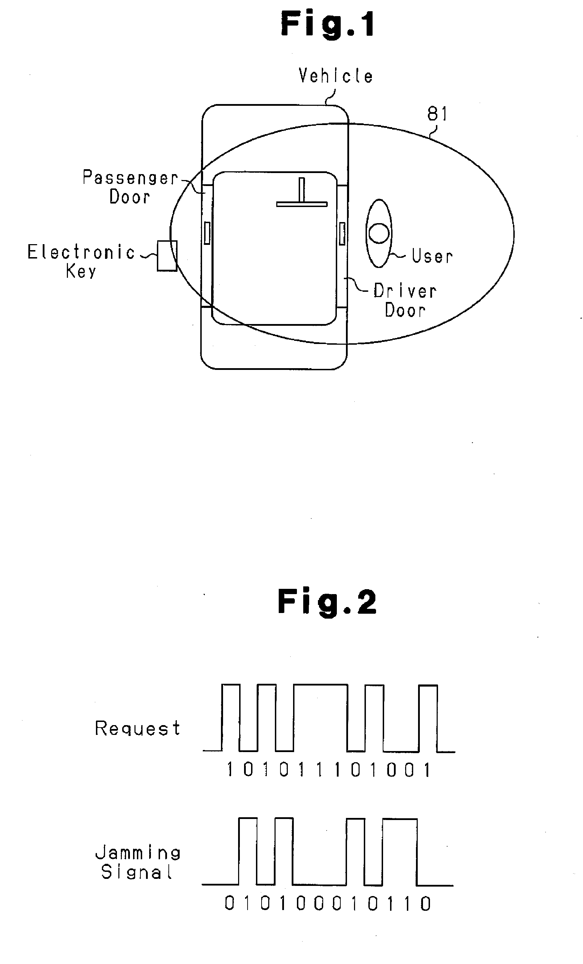

Referring to Fig. 1, a request roughly sets a communication area 81, which is roughly set. In other words, the communication area 81 is formed not just near the door that is operated. For example, when a user touches the exterior door handle of the driver door, the communication area 81 formed around the driver door may extend to the door located at the opposite side of the vehicle, namely, the passenger door. In such a case, the electronic key may receive a request when the electronic key is located near the passenger door even though the user is near the driver door. As a result, communication would be established between the electronic key and the vehicle. This would unlock the driver door even though the user does not intend to unlock it.

To solve such a problem, Japanese Laid-Open Patent Publication Nos. 2005-207223 and 2003-20838 describe techniques for transmitting a jamming signal from a vehicle exterior transmitter arranged in a non-operated door (non-triggering location). The jamming signal prevents an electronic key that is located near the non-operated door from receiving a normal signal transmitted from a vehicle exterior transmitter arranged in an operated door (triggering location). In these techniques, referring to Fig. 2, when the vehicle exterior transmitter of the operated door transmits a request, which includes the binary information of "0" and "1", as the normal signal, the vehicle exterior transmitter of the non-operated door transmits a jamming signal that forms a radio wave of "1" when the request shifts to "0". This prevents the electronic key from receiving the request when located near the non-operated door.

A signal-to-noise ratio (S/N ratio, unit: dB) is known as a measure used to indicate the capability of communication between the vehicle and the electronic key. Theoretically, the S/N ratio becomes infinitely large when there is no noise. In other words, a higher S/N ratio increases the communication capability. It is thus preferable that the S/N ratio be high to ensure sufficient communication capability. That is, a higher S/N ratio increases the difference between the output value of a signal and the output value of noise and clearly distinguishes a signal from noise. This ensures that a signal transmitted from the vehicle is received by the electronic key.

There are locations near the vehicle in which the value of the jamming signal becomes large relative to the normal signal. At such a location, when the normal signal is represented by S and the jamming signal is represented by N, the S/N ratio becomes low. That is, the output values of the jamming signal and the normal signal become equal or the difference between the output values become small. As a result, for example, even though the user and the electronic key are located near the same door, the electronic key may not correctly recognize the normal signal even though it is being received. In other words, null points may be formed near the vehicle at which communication is not established between the electronic key and the vehicle. This may narrow the communication area of the normal signal. It is thus required that this problem be solved.

The present invention provides a system and method for setting the communication availability of an electronic key that prevents the electronic key from receiving a normal signal when the electronic key is located near the transmitter transmitting the normal signal but the user is located far from that transmitter, while ensuring the formation of a sufficient communication area for the normal signal when the user and the electronic key are both located near the transmitter transmitting the normal signal.

One embodiment of the present invention is a system for setting communication availability of an electronic key for a plurality of transmitters. The plurality of transmitters are arranged at different positions on a communication subject of the electronic key. The electronic key is configured to return an ID code in response to a normal signal transmitted from one of the plurality of transmitters. The transmitter that transmits the normal signal is configured to perform ID verification with the ID code. The system includes a dummy signal transmission unit arranged in the communication subject to generate a dummy signal in synchronism with the normal signal and transmit the dummy signal from a transmitter that does not transmit the normal signal. A signal output unit is arranged in the electronic key to receive a combined signal of the normal signal and the dummy signal and output a characteristic signal that varies in accordance with the level of the combined signal. A location determination unit is arranged in the electronic key to determine the transmitter the electronic key is located near from a conforming value corresponding to a variation in the characteristic signal.

A further embodiment of the present invention is a method for setting communication availability of an electronic key for a plurality of transmitters. The plurality of transmitters are arranged at different positions on a communication subject of the electronic key. The electronic key returns an ID code in response to a normal signal transmitted from one of the plurality of transmitters. The transmitter that transmits the normal signal performs ID verification with the ID code. The method includes transmitting a dummy signal synchronized with the normal signal from a transmitter that does not transmit the normal signal, receiving a combined signal of the normal signal and the dummy signal with the electronic key, generating a characteristic signal that varies in accordance with the level of the combined signal, and determining the transmitter the electronic key is located near from a conforming value corresponding to a variation in the characteristic signal.

Other emobiments and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic diagram showing an electronic key system of the prior art;
Fig. 2 is a waveform diagram showing an example of a jamming signal in the prior art;
Fig. 3 is a schematic block diagram showing the structure of an electronic key system in one embodiment;
Fig. 4 is a schematic diagram showing a vehicle exterior communication area for a driver side vehicle exterior transmitter;
Fig. 5 is a schematic diagram showing a vehicle exterior communication area for a passenger side vehicle exterior transmitter;
Fig. 6 is a time chart showing communication contents of the electronic key system;
Fig. 7 is a schematic block diagram showing a communication availability setting system;
Fig. 8 is a waveform diagram showing the signal contents of a dummy signal;
Fig. 9 is an explanatory diagram showing the output characteristics of an AGC circuit;
Fig. 10 is an explanatory diagram showing the operation contents of the system when the electronic key is located near a vehicle door that is far from the user;
Fig. 11 is an explanatory diagram showing the operation contents of the system when the electronic key and the user are both located near the same vehicle door;
Fig. 12 is a waveform diagram showing a further example of a dummy signal; and
Fig. 13 is a waveform diagram showing the output characteristics of a reference conforming circuit in a further example.

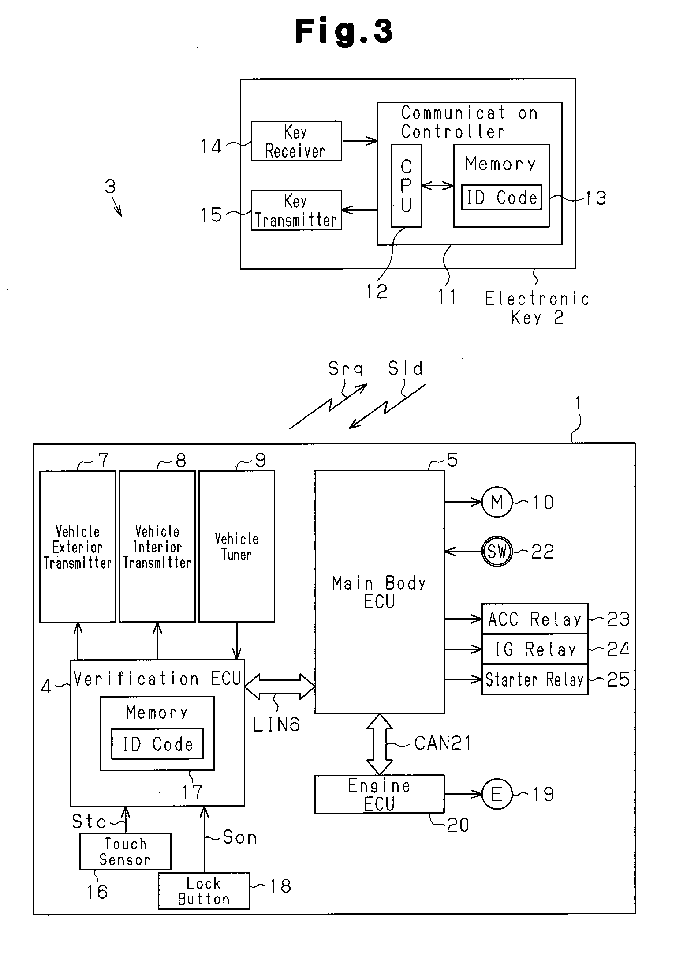

A system and method for setting the communication availability of an electronic key according to one embodiment of the present invention will now be discussed with reference to Figs. 3 to 12.

Referring to Fig. 3, a vehicle 1 includes an electronic key system 3. The electronic key system 3 performs wireless communication with an electronic key 2, which is used as a vehicle key, to perform key verification. Wen the key verification is successful, the electronic key system 3 lock or unlocks a door (opens or closes a door lock) or permits starting of the engine. The electronic key 2, which is capable of performing narrow band wireless communication with the vehicle 1, transmits a unique ID code as a key code to the vehicle 1. The vehicle 1 performs key verification with the received ID code. In this example, the vehicle 1 serves as a communication subject.

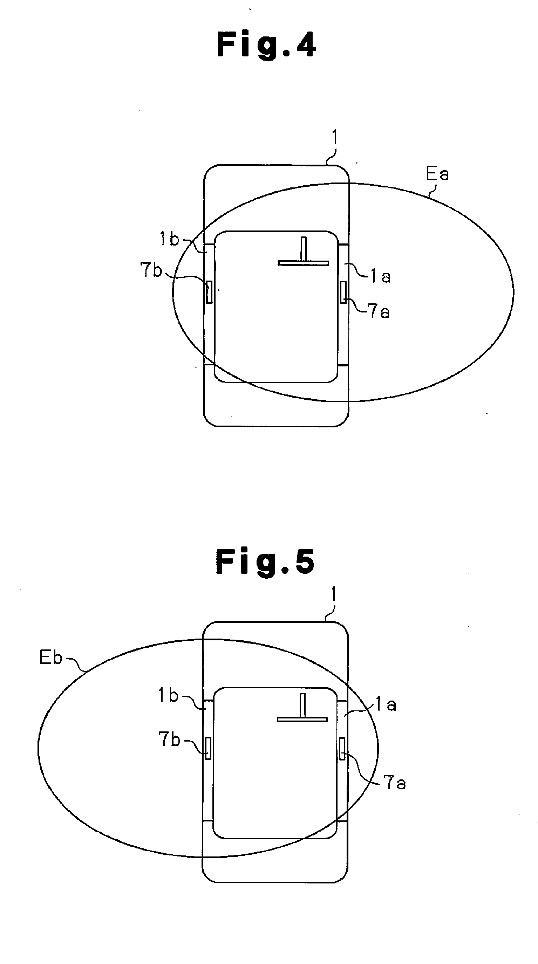

The electronic key system 3 is a key-operation-free system eliminating the need for operation of a specific key when transmitting the ID code from the electronic key 2. The key-operation-free system may be a smart entry system that does not require the operation of a key when locking or unlocking a door. In this case, the vehicle includes a verification electronic control unit (ECU) 4, which performs key verification (ID verification) with the electronic key 2, and a main body ECU 5, which manages a power system of the vehicle 1. A local interconnect network (LIN) 6, which is a network formed in the vehicle 1, connects the ECUs 4 and 5 to each other. The verification ECU 4 is connected to a vehicle exterior transmitter 7, a vehicle interior transmitter 8, and a vehicle tuner 9. The vehicle exterior transmitter 7 transmits low frequency (LF) band radio waves (approximately 134 kHz) outside the vehicle 1. The vehicle interior transmitter 8 transmits similar LF radio waves inside the vehicle 1. The vehicle tuner 9 receives radio waves in the radio frequency (RF: approximately 312 MHz), which is in the ultrahigh frequency (UHF). A vehicle exterior transmitter 7 is arranged in each door of the vehicle 1 (for example, a driver door 1a and a passenger door 1b as shown in Fig. 4). The main body ECU 5 is connected to a door lock motor 10, which serves as a drive source for locking and unlocking a door.

The electronic key 2 includes a communication controller 11, which controls various operations of the electronic key 2. The communication controller 11 includes various devices such as a central processing unit (CPU) 12 and a memory 13. The ID code of the electronic key 2 is registered with the memory 13. A key receiver 14, which receives LF radio waves, and a key transmitter 15, which transmits RF radio waves, are connected to the communication controller 11. The communication controller 11 continuously monitors whether the key receiver 14 has received radio waves and manages the operation of the key transmitter 15, which transmits radio waves.

The verification ECU 4 is electrically connected to a touch sensor 16, which is embedded in a door handle arranged on the exterior of the vehicle 1. When the door is locked and the verification ECU 4 receives a sensor signal Stc from the touch sensor 16, the verification ECU 4 determines that the door handle has been operated and recognizes this as a trigger for a door unlocking operation. The verification ECU 4 thus transmits a request signal Srq in the LF band and requests a response with the ID code. In this example, the driver door 1a and the passenger door 1b transmit separate request signals Srq. Thus, when the exterior door handle of the driver door 1a is touched, as shown in Fig. 4, the request signal Srq is transmitted from a vehicle exterior transmitter 7a, which is arranged in the driver door 1a. This forms a driver side exterior communication area Ea around the driver door 1a. When the exterior door handle of the passenger door 1b is touched, as shown in Fig. 5, the request signal Srq is transmitted from a vehicle exterior transmitter 7b, which is arranged in the passenger door 1b. This forms a passenger side exterior communication area Eb around the passenger door 1b. In this example, the vehicle exterior transmitter 7 (7a and 7b) serves as a transmitter.

The verification ECU 4 intermittently transmits the request signal Srq from the vehicle exterior transmitter 7 to form a vehicle exterior communication area of the request signal Srq around the vehicle 1 and establish narrow band wireless communication (hereinafter referred to as smart communication). When the electronic key 2 enters the vehicle exterior communication area and receives the request signal Srq, the electronic key 2 returns an ID signal Sid, which includes the ID code registered in its memory 13, with RF radio waves. When the vehicle tuner 9 receives the ID signal Sid and establishes smart communication (vehicle exterior communication), the verification ECU 4 verifies the ID code of the electronic key 2 with the ID code registered in its memory 17 and performs a so-called smart verification (vehicle exterior verification). When determining that the vehicle exterior verification has been successful, the verification ECU 4 unlocks the door with the main body ECU 5.

The verification ECU 4 is also connected to a lock button 18, which is arranged next to the exterior door handle. When the door is unlocked and the verification ECU 4 receives an ON signal Son from the lock button 18, in the same manner as when unlocking the door, the verification ECU 4 transmits the request signal Srq from the vehicle exterior transmitter 7 and performs ID verification with the electronic key 2. When determining that the ID verification of the electronic key 2 has been successful, the verification ECU 4 locks the door with the main body ECU 5.

The key-operation-free system further includes a one-push engine start system that allows the driver to start the engine 19 just by operating a switch and does not require the driver to use the vehicle key. In the one-push engine start system, the main body ECU 5 is connected to an engine ECU 20 via a controller area network (CAN) 21, which is a network formed in the vehicle 1. The engine ECU 20 manages ignition control and fuel injection control of the engine 19. Further, an engine switch 22 of a push-momentary type is arranged in the vehicle 1 to operate the one-push engine start system. The engine switch 22 is connected to the main body ECU 5. The engine switch 22 functions to start and stop the engine 19. The engine switch 22 is also used to activate a power supply transition function. The main body ECU 5 is further connected to an accessory (ACC) relay 23 connected to an in-vehicle accessory, an ignition (IG) relay 24 connected to various electronic devices used to drive the vehicle 1, and a starter relay 25 connected to an engine starter (not shown).

When determining with, for example, a courtesy switch (not shown) that the driver has entered the vehicle, the verification ECU transmits a request signal Srq from the vehicle interior transmitter 8 to form a vehicle interior communication area in the vehicle 1 that extends throughout the entire passenger compartment. When the electronic key 2 enters the vehicle interior communication area, the electronic key 2 returns an ID signal Sid. When the ID signal Sid is received by the vehicle tuner 9, smart communication (in-vehicle communication) is established. The verification ECU 4 verifies the ID code of the electronic key 2 with its registered ID code and performs a so-called smart verification (vehicle interior verification). When determining that the in-vehicle verification has been successful, the verification ECU 4 permits the power supply state to be switched when the engine switch 22 is pushed.

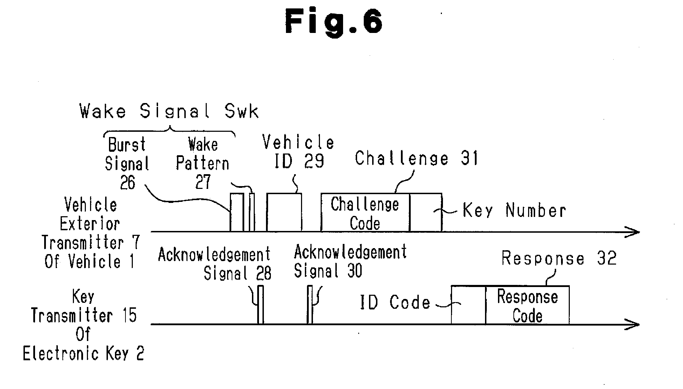

The form of communication for ID verification will now be described in further detail with reference to Fig. 6. As shown in Fig. 6, the verification ECU 4 intermittently transmits a wake signal Swk with LF radio waves from the vehicle exterior transmitter 7. The wake signal Swk includes a burst signal 26 and a wake pattern 27. The burst signal 26 activates the electronic key 2 and stabilizes the active state of the electronic key 2. The wake pattern 27 has a predetermined code string (bit string) and shows information of the wake signal Swk. When the electronic key 2 enters the vehicle exterior communication area and receives the wake signal Swk with the key receiver 14, the burst signal Swk shifts the electronic key 2 from a standby state to an active state. In this example, the wake signal Swk serves as a normal signal, the burst signal 26 serves as a preamble signal, and the wake pattern 27 serves as a data signal.

After being activated, the electronic key 2 identifies the code string of the following wake pattern 27. When the wake pattern 27 is identical to the one stored in the electronic key 2, the electronic key 2 continues to operate. However, when the wake pattern 27 differs from the one stored in the electronic key 2, the electronic key 2 does not respond to the wake pattern 27 and aborts the operation. When the received wake pattern 27 is identical to its stored pattern, the electronic key 2 determines that wake pattern verification has been successful. To provide notification of successful verification, the electronic key 2 returns an acknowledgement signal 28 with RF radio waves to the vehicle 1.

When receiving the acknowledgement signal 28 within a predetermined time after transmitting the wake signal Swk, the verification ECU 4 recognizes the presence of the electronic key 2 near the vehicle 1. The verification ECU 4 then transmits a vehicle ID 29 as an ID unique to the vehicle from the vehicle exterior transmitter 7 with the LF radio waves. When receiving the vehicle ID 29, the electronic key 2 carries out vehicle ID verification to determine whether the vehicle 1, with which the electronic key 2 is performing smart communication, is the correct vehicle. The vehicle ID verification is carried out so that in a state of heavy communication in which there a plurality of vehicles near the electronic key 2, smart communication is carried out with only the correct vehicle. When determining that vehicle ID verification has been satisfied, the electronic key 2 returns an acknowledgement signal 30 with RF radio waves to the vehicle 1 to provide notification of the successful verification.

When receiving the acknowledgement signal 30 within a predetermined time after transmitting the vehicle ID 29, the verification ECU 4 recognizes the successful verification. Then, the verification ECU 4 starts challenge response authentication and transmits a challenge 31 with LF radio waves. The challenge 31 includes a challenge code (random number code), the value of which varies whenever transmitted, and a key number of the electronic key 2. The key number indicates a master key number or a sub-key number. The key number is verified in this manner so that when a master key and a sub-key are both present in the same communication area, the keys are prevented from starting communication at the same time.

When the electronic key 2 receives the challenge 31 from the vehicle 1, the electronic key 2 performs a key number verification and checks the key number in the challenge 31. That is, the electronic key 2 verifies whether or not the electronic key 2 itself is the present subject of the smart communication. When the number verification is successful, the electronic key 2 uses its cipher key to carry out a computation on the challenge code included in the challenge 31 and generate a response code. Then, the electronic key 2 returns a response 32, which includes the response code and the ID code registered with its memory 17, with RF radio waves to the vehicle 1.

When the verification ECU 4 transmits the challenge 31 to the electronic key 2, the verification ECU 4 uses its cipher key to perform a computation on the challenge code and generate its response code. When receiving the response 32 from the electronic key 2, the verification ECU 4 verifies the response code of the electronic key 2 with the response code it generated to perform response verification. When the response verification is successful, the verification ECU 4 determines whether or not the ID code included in the response 32 is correct. When the response verification and ID code verification are both successful, the verification ECU determines that smart verification has been successful and locks or unlocks the vehicle door.

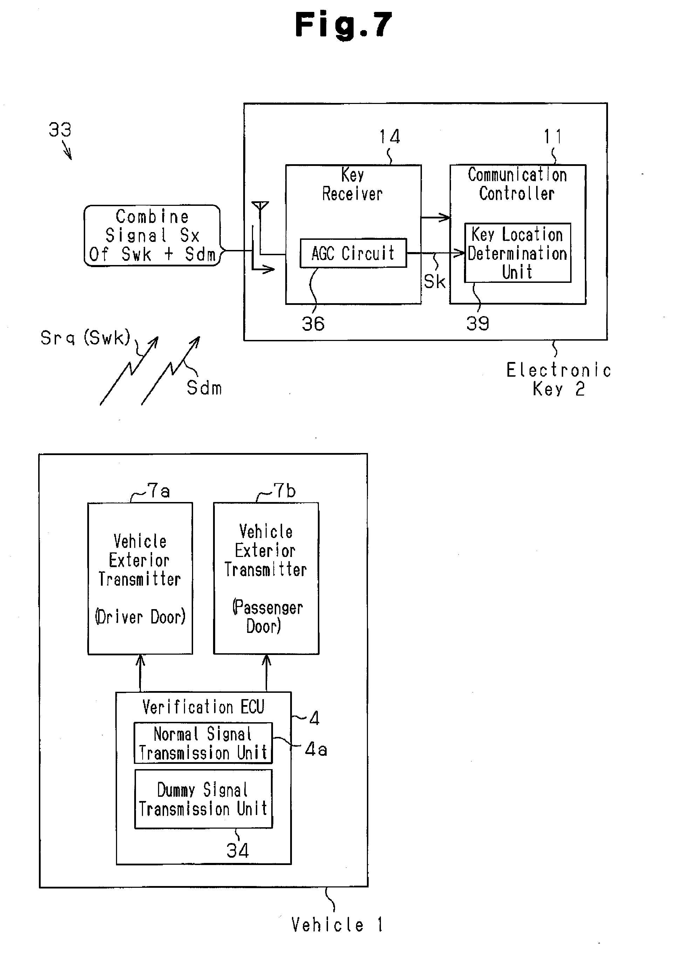

Referring to Fig. 7, the vehicle 1 includes a communication availability setting system 33, which preferably forms part of the electronic key system 3 (Fig. 3). When an operation for triggering locking or unlocking of a door is performed from outside the vehicle 1, the communication availability setting system 33 establishes communication for ID verification only if the electronic key 2 is arranged near the operated door. In the communication availability setting system 33 of the present example, when one of the transmitters 7 transmits the request signal Srq (e.g., the wake signal Swk), the other transmitter 7, which is not transmitting the wake signal Swk, synchronously transmits a dummy signal Sdm. The electronic key 2 receives a combined signal Sx of the wake signal Swk and the dummy signal Sdm and determines its location from the waveform variation of the combined signal Sx.

The verification ECU 4 includes a dummy signal transmission unit 34. In this case, the dummy signal transmission unit 34 transmits the dummy signal Sdm from the other transmitter 7, which is not transmitting the wake signal Swk. The dummy signal transmission unit 34 generates the dummy signal Sdm in synchronism with the wake signal Swk. Thus, when the wake signal Swk is transmitted from the vehicle exterior transmitter 7 of the operated door, which is the vehicle door that has under a door triggering operation (touching of the door lever or pushing of a locking button), the dummy signal transmission unit 34 generates the dummy signal Sdm in synchronism with the wake signal Swk. For example, when the vehicle exterior transmitter 7a located near the driver seat transmits the wake signal Swk, the vehicle exterior transmitter 7b located near the passenger seat transmits the dummy signal Sdm. Further, the verification ECU 4 includes a normal signal transmission unit 4a, which transmits the request signal Srq (wake signal Swk) for executing normal smart verification. In this example, the dummy signal transmission unit 34 serves as a dummy signal transmission means.

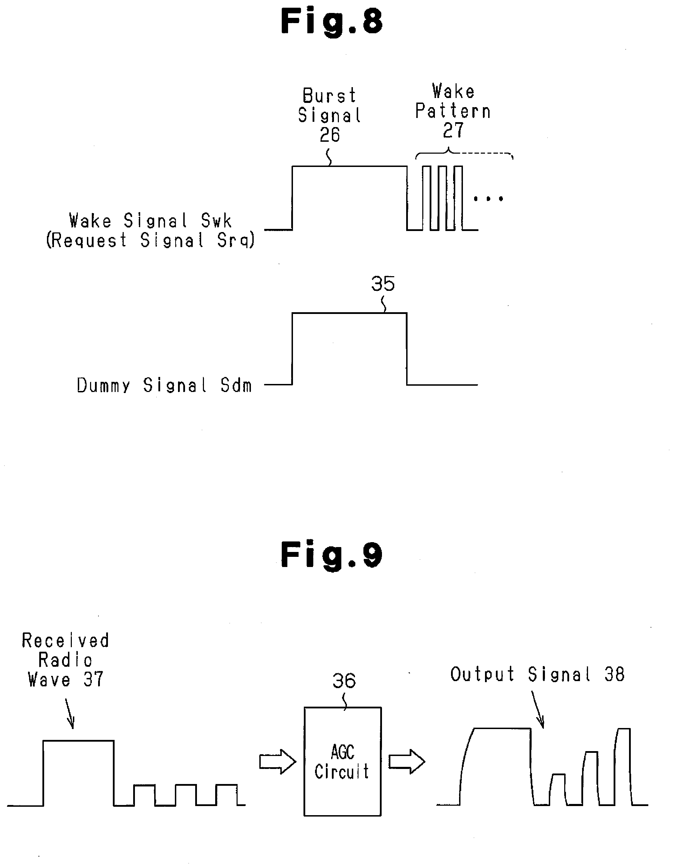

Referring to Fig. 8, the dummy signal Sdm of this example forms a dummy burst signal 35, which has a pulse that is basically synchronized with the burst signal 26 of the wake signal Swk. The dummy burst signal 35 is transmitted at the same timing as the burst signal 26 and has the same bit length as the burst signal 26. The dummy burst signal 35 is set to have a time length of ten bits. The dummy burst signal 35 has an amplitude that is not necessarily the same as that of the burst signal 26 and may be higher than or lower than the amplitude of the burst signal 26. However, the amplitude of the dummy burst signal 35 is preferably greater than the burst signal 26. Further, the communication area in which the dummy signal Sdm is transmitted has about the same size as the communication area to which the request signal Srq is transmitted. However, the dummy signal Sdm and the request signal Srq are transmitted from different vehicle exterior transmitters 7 and thus have communication areas formed in different locations. In this example, the dummy burst signal 35 serves as a first component.

Referring to Fig. 7, the key receiver 14 includes an automatic gain control (AGC) circuit 36, which serves as an amplification circuit for the received radio wave. The AGC circuit 36 automatically adjusts the amplification rate (sensitivity and gain) in accordance with the intensity of the received radio wave and functions to sustain the amplification output level even when the input level of the received radio wave varies. For example, as shown in Fig. 9, a received radio 37 input to the AGC circuit 36 may be formed by a plurality of bits. When the first bit has a large amplitude and the subsequent bits have small amplitudes, the AGC circuit 36 gradually increases the amplitudes of the subsequent bits based on the amplification value of the first bit. The AGC circuit 36 uses such response characteristics to convert the received radio wave 37 to an output signal 38. In Fig. 7, the AGC circuit 36 amplifies the combined signal Sx received by the key receiver Sk and provides the communication controller 11 with the amplified signal as an automatic gain amplified signal Sk. The AGC circuit 36 is installed in the key receiver 14 (i.e., the electronic key 2) from the beginning to amplify the signal energy of the received radio wave. In this example, the AGC circuit 36 serves as a signal output means and an automatic gain control circuit, and the automatic gain amplified signal Sk serves as a characteristic signal.

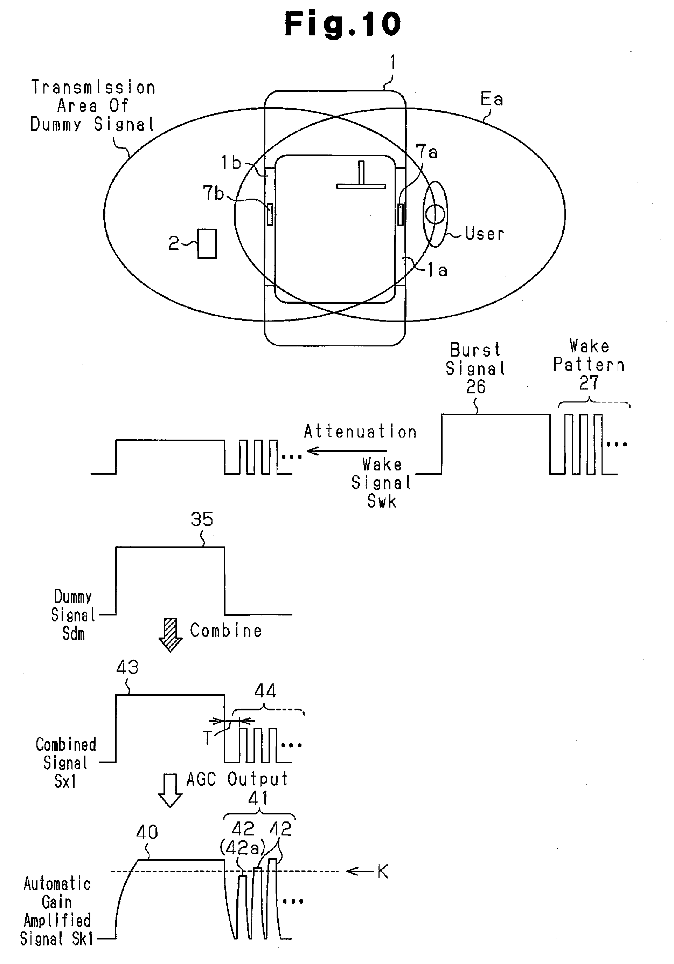

The communication controller 11 includes a key location determination unit 39, which determines whether the electronic key 2 is located closer to the operated door or the non-operated door based on the automatic gain amplified signal Sk from the AGC circuit 36. Referring to Fig. 10, the automatic gain amplified signal Sk includes a signal having dummy signal amplified value 40, which is the amplified value of the dummy signal Sdm, and a wake signal amplified value 41 (bits 42). The key location determination unit 39 receives the dummy signal amplified value 40 and the subsequent wake signal amplified values 41. Then, the key location determination unit 39 compares the wake signal amplified value 41 with a location determination threshold value K to determine the location of the electronic key 2. The determination threshold value K is set in accordance with the output responsiveness (conforming characteristics) of the AGC circuit 36. In this example, the key location determination unit 39 serves as a location determination means, each of the bits 42 serves as a conforming value, and the determination threshold value K serves as a threshold value.

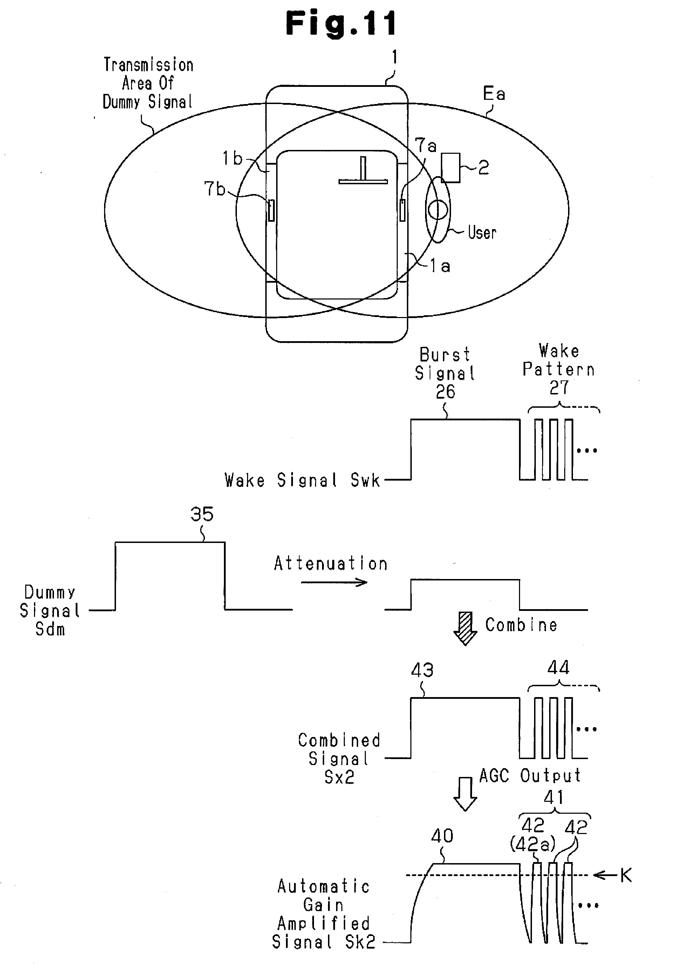

The operation of the communication availability setting system 33 will now be discussed with reference to Figs. 10 and 11.

The upper part of Fig. 10 shows a state in which the user is located near the driver door 1a and the electronic key 2 is located near the passenger door 1b. In this state, the user touches the exterior door handle of the driver door 1a with his or her hand. The touching of the exterior door handle triggers the transmission of the wake signal Swk from the vehicle exterior transmitter 7a, which is arranged near the driver seat, to establish wireless communication and determine whether or not vehicle exterior verification is successful near the driver door 1a.

When the vehicle exterior transmitter 7a located near the driver seat transmits the request signal Srq, namely, the wake signal Swk, the vehicle exterior transmitter 7b located near the passenger seat transmits the dummy signal Sdm in synchronism with the wake signal Swk. When the signals Swk and Sdm are transmitted, as shown in the lower part of Fig. 10, the electronic key 2 receives a combined signal Sx1 of the wake signal Swk and the dummy signal Sdm. In this case, the electronic key 2 is located near the passenger door 1b. Thus, the dummy signal Sdm reaches the electronic key 2 in a state sustained as a strong radio wave, while the wake signal Swk reaches the electronic key 2 in a greatly attenuated state. Thus, among the wake signal Swk and the dummy signal Sdm, the components of the combined signal Sx1 is greatly dependent on the dummy signal Sdm. Specifically, in the combined signal Sx1, the bit corresponding to the dummy signal Sdm, namely, the dummy signal bit 43) has a large amplitude. However, the bit string (bit string of the wake pattern 27) following the dummy signal bit 43 corresponding to the wake signal Swk, namely, the wake signal bit 44, has a small amplitude.

The combined signal Sx1 is received by the key receiver 14. Then, the AGC circuit 36 amplifies and outputs the combined signal Sx1 as an automatic gain amplified signal Sx1. The automatic gain amplified signal Sk1 includes a signal having the dummy signal amplified value 40, which is the amplified value of the dummy signal bit 43, and the wake signal amplified value 41, which is the amplified value of the wake signal bit 44. The wake signal amplified value 41 includes the bits 42 corresponding to the bit string of the wake pattern 27, and the amplitude of each bit 42 gradually increases so as to conform to the amplification level of the dummy signal amplified value 40. Thus, at the location of the electronic key 2 in Fig. 10, the dummy signal amplified value 40 is large but a head bit 42a (wake signal amplified value 41) following the dummy signal amplified value 40 has a relatively small amplitude. The amplitudes of the bits 42 including the head bit 42a gradually increases to the level of the dummy signal amplified value 40.

In this state, the value of the head bit 42a in the automatic gain amplified signal Sk1 is less than the determination threshold value K. Thus, the key location determination unit 39 determines that the electronic key 2 is located near the passenger door 1b. That is, the key location determination unit 39 determines that the electronic key 2 is located near the door that differs from the vehicle door that has undergone the door triggering operation, namely, the non-operated door, which is located opposite to the operated door located near the user. In this case, the key location determination unit 39 does not respond to the wake signal Swk even when the electronic key 2 receives the wake signal Swk. Accordingly, vehicle exterior communication is not established.

The upper part of Fig. 11 shows a state in which the user is carrying the electronic key 2 and located near the driver door 1a. In this state, the user touches the exterior door handle of the driver door 1a with his or hand. In the same manner as the example shown in Fig. 10, the touching of the exterior door handle triggers the transmission of the wake signal Swk from the vehicle exterior transmitter 7a, which is arranged near the driver seat, to establish wireless communication and determine whether or not vehicle exterior verification is successful near the driver door 1a. Further, the vehicle exterior transmitter 7b, which is arranged near the passenger seat, transmits the dummy signal Sdm in synchronism with the wake signal Swk.

The electronic key 2 receives a combined signal Sx2 of the wake signal Swk and the dummy signal Sdm. In this case, the electronic key 2 is located near the driver door 1a. Thus, the wake signal Swk reaches the electronic key 2 in a state sustained as a strong radio wave, while the dummy signal Sdm reaches the electronic key 2 in a greatly attenuated state. Thus, among the wake signal Swk and the dummy signal Sdm, the components of the combined signal Sx2 are greatly dependent on the wake signal Swk. That is, the dummy signal bit 43 and the wake signal bit 44 both have large bit values.

The combined signal Sx2 is received by the key receiver 14. Then, the AGC circuit 36 amplifies and outputs the combined signal Sx2 as an automatic gain amplified signal Sk2. At the location of the electronic key 2 in Fig. 11, each bit of the combined signal Sx2 has the same level. Thus, the dummy signal amplified value 40 is large, and the wake signal amplified value 41 has the same level as the dummy signal amplified value 40 from the head bit 42a. In other words, each bit 42 has the same amplitude as the dummy signal amplified value 40.

In this state, the value of each bit 42 in the automatic gain amplified signal Sk2 is greater than or equal to the determination threshold value K. Thus, the key location determination unit 39 determines that the electronic key 2 is located near the driver door 1a. That is, the key location determination unit 39 determines that the electronic key 2 is located near the door that has undergone the door triggering operation, namely, the operated door, which is located near the user and the electronic key 2. In this case, the key location determination unit 39 responds to the wake signal Swk transmitted from the electronic key 2 and establishes vehicle exterior communication.

In this manner, when the vehicle exterior transmitter 7 of the operated door transmits the wake signal Swk (request signal Srq), the vehicle exterior transmitter 7 of the non-operated door transmits the dummy signal Sdm in synchronism with the wake signal Swk. When the electronic key 2 receives the combined signal Sx of the wake signal Swk and the dummy signal Sdm, the AGC circuit 36 amplifies the combined signal Sx and generates the amplified signal Sk. The electronic key 2 determines its location from the amplified signal Sk and does not establish communication when the electronic key 2 is located near the non-operated door. Accordingly, when the electronic key 2 is located near the door that is opposite to the door located near the user, ID code verification is not satisfied. This prevents the door from being unlocked against the user's will.

As described above, the signal-to-noise ratio (S/N ratio, unit: dB) is known as a measure used to indicate the communication capability of the electronic key system 3. In the present example, the dummy signal Sdm is used as a jamming signal to prevent the electronic key 2 when located near the non-operated door from receiving the wake signal Swk. The dummy signal Sdm is transmitted in synchronism with the wake signal Swk. Accordingly, the S/N ratio of the wake signal Swk is not affected by the dummy signal Sdm. This avoids a situation in which the dummy signal Sdm narrows the vehicle exterior communication area. Thus, the range of the communication area is stabilized.

The dummy signal Sdm described above is formed as a simple dummy burst signal 35. However, it is preferable that the dummy signal Sdm be formed in accordance with the responsiveness of the AGC circuit 36. For example, referring to Fig. 10, when the time interval T between the dummy signal bit 43 and the wake signal bit 44 in the combined signal Sx is too long, the head bit 42a may exceed the determination threshold value K due to the responsiveness (output conforming characteristic) of the AGC circuit 36. In such a case, the bits 42 output as amplified values of the wake signal bit 44 do not become less than the determination threshold value K, and the key location cannot be accurately determined. Thus, the time interval T is preferably set to be sufficiently short taking into consideration the responsiveness of the AGC circuit 36. In other words, it is preferable that the time difference be relatively large between any two bits, which are adjacent to each other in terms of time interval.

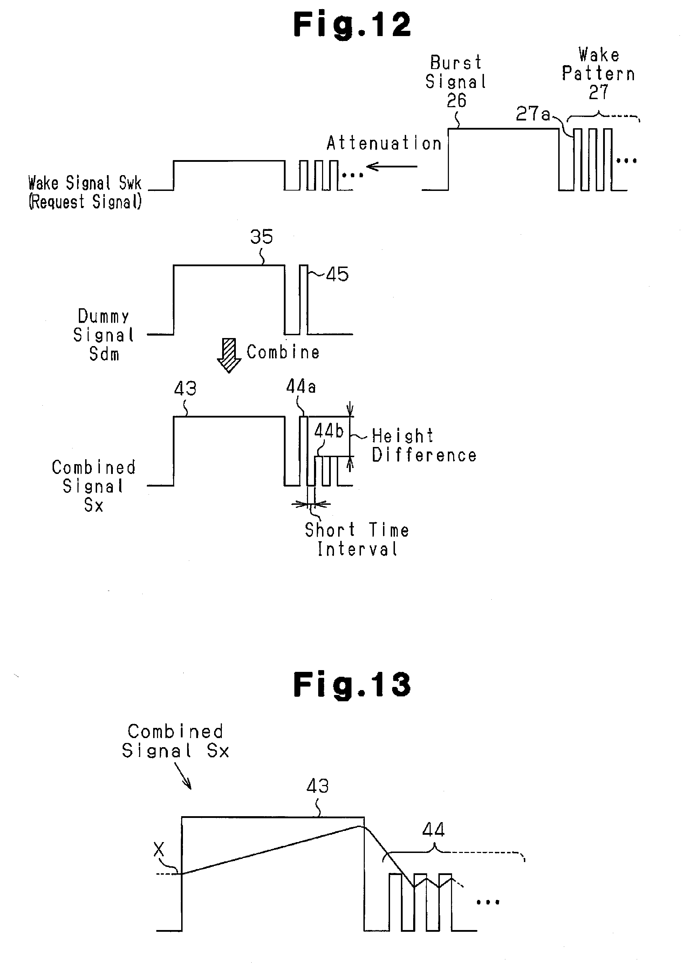

For example, referring to Fig. 12, instead of forming the dummy signal Sdm simply from the dummy burst signal 35, the dummy signal Sdm may further include a first bit signal 27a of the wake pattern 27 following the burst signal 26. That is, the dummy signal Sdm may include the dummy burst signal 35 and a dummy bit signal 45, which is formed from a pulse synchronized with the first bit signal 27a. As a result, in the combined signal Sx, two adjacent bits (in Fig. 12, a bit 44a corresponding to the dummy bit signal 45 and a following bit 44b) are generated within a short time interval and with a certain amplification difference. Thus, when the user and the electronic key 2 are located near different doors as shown in the state of Fig. 10, this ensures that the bit 42 of the wake signal amplified value 41 (in this case, the second bit 42) is less than the determination threshold value K. In the present example, the dummy bit signal 45 serves as a second element.

The communication availability setting system 33 has the advantages described below.
(1) When the vehicle exterior transmitter 7 of the operated door transmits the wake signal Swk (request signal Srq), the vehicle exterior transmitter 7 of the non-operated door transmits the dummy signal Sdm in synchronism with the wake signal Swk. This prevents the establishment of communication between the electronic key 2 and the vehicle 1 when the electronic key 2 is located near the non-operated door. For example, when the user and the electronic key 2 are located near doors that are opposite to each other, communication is not established. This prevents communication from being established against the user's will. Further, the dummy signal Sdm is transmitted in synchronism with the wake signal Swk. Thus, the S/N ratio of the wake signal Swk is unaffected by the dummy signal Sdm. As a result, even when the radio waves are weak at a certain position in the vehicle exterior communication area, communication of the wake signal Swk is not interrupted by the dummy signal Sdm. This prevents the wake signal Swk from being affected by the dummy signal Sdm at a position where communication is desired. Accordingly, the vehicle exterior communication area of the wake signal Swk is ensured over a wide range.
(2) The AGC circuit 36 is used to output the signal Sk for determining the location of the electronic key 2. The AGC circuit 36 functions so that its output (signal Sk) conforms to a predetermined value. The use of such conforming characteristics of the AGC circuit 36 simplifies the structure for determining the location of the electronic key 2. Further, when the AGC circuit 36 is installed beforehand in the electronic key 2 as an amplification circuit, the output of the AGC circuit 36 may be used to determine the location of the electronic key 2.
(3) The dummy burst signal 35 is transmitted as the dummy signal Sdm. Thus, amplitude variations in the wake pattern 27, which follows the burst signal 26 in the wake signal Swk, allows for determination of the location of the electronic key 2.
(4) When the dummy signal Sdm is formed by the dummy burst signal 35 and the following dummy bit signal 45, a short time interval and a large amplitude difference is produced between two successive bits in the combined signal Sx. This further optimizes the output waveform of the AGC circuit 36 for location determination. Thus, the location of the electronic key 2 is determined with further accuracy.

It should be apparent to those skilled in the art that the present invention may be embodied in many other specific forms without departing from the scope of the invention. Particularly, it should be understood that the present invention may be embodied in the following forms.

The signal output unit is not necessarily limited to the AGC circuit 36. For example, referring to Fig. 13, the signal output unit may be a reference conforming circuit (variable threshold circuit) that varies the threshold value when there is a change in the amplitude level of the combined signal Sx. In this case, the key location determination unit 39 continuously compares the amplitude level of the combined signal Sx with a variable threshold value X. Then, the key location determination unit 39 determines that the electronic key 2 is located near the non-operated door when the amplitude level of the combined signal Sx is less than the variable threshold value X. In this example, the variable threshold value X of the reference conforming circuit serves as a characteristic signal (and a value conforming to changes in the characteristic signal).

The normal signal is not necessarily limited to the wake signal Swk, and any type of signal may be used instead as long as it is transmitted from the vehicle 1.

The dummy signal Sdm is not limited to a signal that is simply formed from the dummy burst signal 35 or from the dummy burst signal 35 and dummy bit signal 45. As long as it is a signal synchronized with the bit of the request signal Srq the signal contents are not limited.

When a door triggering operation is performed, the wake signal Swk may be transmitted more than once.

The communication availability setting system 33 is not limited to the unlocking of a door and may also be applied to the locking of a door.

The dummy burst signal 35 may be set to have a longer bit length (time length) than the burst signal 26 of the wake signal Swk.

The preamble signal is not limited to the burst signal 26, which serves as an output reference, and may be any type of signal as long as it activates the electronic key 2.

The frequency of the radio waves used by the electronic key system 3 is not limited to the LF band and RF band frequencies. A frequency in any band may be used.

The frequencies used for the bidirectional communication of the electronic key system 3 do not have to be the same for the communication performed in both directions and may be different.

The electronic key system 3 is not limited to the key-operation-free system and may be applied to other systems such as an immobilizer system.

The electronic key system 3 is not limited to a trigger type that starts transmission of the wake signal Swk (request signal Srq) when a door triggering operation is performed. For example, the electronic key system 3 may be of an automatic type that constantly transmits the wake signal Swk and continuously monitors the presence of the electronic key 2 near the vehicle. However, the trigger type would reduce power consumption of the electronic key system 3 since communication is not constantly performed.

The communication availability setting system 33 is not limited to vehicle exterior communication and may be applied to, for example, vehicle interior communication. That is, the wireless communication for ID verification may be vehicle exterior communication, which is performed when the electronic key 2 is located outside the communication subject (in the present example, the vehicle 1), or vehicle interior communication, which is performed when the electronic key 2 is located in the communication target.

The application of the communication availability setting system 33 is not limited to the vehicle 1. The communication availability setting system 33 may be applied to any subject as long as bidirectional communication is performed by the subject. Thus, the communication target is not limited to the vehicle 1, and various types of devices may be used as the communication target.

## Claims

1. A system (33) for setting communication availability of an electronic key (2) for a plurality of transmitters (7: 7a, 7b), wherein the plurality of transmitters are arranged at different positions on a communication subject (1) of the electronic key, the electronic key is adapted to return an ID code in response to a normal signal (rq) transmitted from one of the plurality of transmitters, and the transmitter (7a) that transmits the normal signal (rq) is adapted to perform ID verification with the ID code, the system (33) being **characterized by** comprising:
a dummy signal transmission unit (34) arranged in the communication subject (1) to generate a dummy signal (Sdm) in synchronism with the normal signal (rq) and transmit the dummy signal from the transmitter (7b) that does not transmit the normal signal;
a signal output unit (36) arranged in the electronic key (2) to receive a combined signal (Sx) of the normal signal (rq) and the dummy signal (Sdm) and output a characteristic signal (Sk) that varies in accordance with the level of the combined signal (Sx); and
a location determination unit (39) arranged in the electronic key (2) to determine the transmitter the electronic key is located near from a conforming value (42) corresponding to a variation in the characteristic signal (Sk).

2. The system (33) according to claim 1, being **characterized in that**:
the signal output unit includes an automatic gain control circuit (36) that automatically adjusts an output gain and functions to sustain the level of the characteristic signal (Sk) at a predetermined level; and
the location determination unit (39) compares the level of the characteristic signal (Sk) output from the automatic gain control circuit (36) with a threshold value (K) to determine the location of the electronic key (2).

3. The system (33) according to claim 1, being **characterized in that**:
the normal signal (rq) includes a preamble signal (26) for activating the electronic key (2); and
the dummy signal (Sdm) includes a pulse (35) synchronized with the preamble signal (26).

4. The system (33) according to claim 3, being **characterized in that**:
the normal signal (rq) further includes a predetermined bit string (27) following the preamble signal (26); and
the combined signal (Sx) includes:
a first pulse (43) corresponding to the pulse (35) of the dummy signal (Sdm); and
a plurality of second pulses (44) corresponding to the bit string (27) of the normal signal (rq); and
the conforming value (42) corresponding to a variation in the characteristic signal is represented by an amplitude level of the plurality of second pulses (44).

5. The system (33) according to claim 1, being **characterized in that**:
the normal signal (rq) includes:
a preamble signal (26) for activating the electronic key; and
a data signal (27) following the preamble signal and showing an information content of the normal signal, the data signal (27) having a plurality of bits; and
the dummy signal (Sdm) includes:
a first component (35) formed by a pulse synchronized with the preamble signal (26); and
a second component (45) formed by a pulse synchronized with a first bit of the data signal (27).

6. The system (33) according to claim 5, being **characterized in that**:
the combined signal (Sx) includes:
a first pulse (43) corresponding to the first component (35) of the dummy signal;
a second pulse (44a) corresponding to the second component (45) of the dummy signal; and
a plurality of third pulses (44b) corresponding to second and subsequent bits of the normal signal; and
the conforming value (42) corresponding to a variation in the characteristic signal is represented by an amplitude level of the plurality of third pulses (44b).

7. A method for setting communication availability of an electronic key (2) for a plurality of transmitters (7: 7a, 7b), wherein the plurality of transmitters are arranged at different positions on a communication subject (1) of the electronic key, the electronic key returns an ID code in response to a normal signal (rq) transmitted from one of the plurality of transmitters, and the transmitter (7a) that transmits the normal signal (rq) performs ID verification with the ID code, the method being **characterized by** comprising:
transmitting a dummy signal (Sdm) synchronized with the normal signal (rq) from the transmitter (7b) that does not transmit the normal signal;
receiving a combined signal (Sx) of the normal signal (rq) and the dummy signal (Sdm) with the electronic key (2);
generating by the electronic key a characteristic signal (Sk) that varies in accordance with the level of the combined signal (Sx); and
determining by the electronic key the transmitter that the electronic key is located near from a conforming value (42) corresponding to a variation in the characteristic signal (Sk).
